(19) Europäisches Patentamt
European Patent Office
Office européen des brevets

(11) **EP 2 634 047 B1**

(12) **EUROPEAN PATENT SPECIFICATION**

(45) Date of publication and mention of the grant of the patent:
**26.11.2014 Bulletin 2014/48**

(51) Int Cl.:
***B60R 21/38*** *(2011.01)*

(21) Application number: **12157878.5**

(22) Date of filing: **02.03.2012**

(54) **Hinge mechanism**

Scharniermechanismus

Mécanisme de charnière

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.09.2013 Bulletin 2013/36**

(73) Proprietor: **Volvo Car Corporation**
**40 531 Göteborg (SE)**

(72) Inventors:
• **Zippert, Tommy**
**41507 Göteborg (SE)**
• **Björnrud, Christer**
**44290 Kungälv (SE)**

• **Gråberg, Niklas**
**42941 Särö (SE)**
• **Gullander, Christina**
**43349 Partille (SE)**
• **Fredriksson, Anders**
**41457 Göteborg (SE)**
• **Karlsson, Henrik**
**43138 Mölndal (SE)**

(74) Representative: **Valea AB**
**Box 1098**
**405 23 Göteborg (SE)**

(56) References cited:
**EP-A1- 1 818 224     EP-A1- 2 345 563**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The invention relates to a hinge mechanism for a bonnet of a vehicle.

BACKGROUND OF THE INVENTION

If a motor vehicle, such as a car, is involved in an accident in which the front part of the vehicle hits a pedestrian, it is not uncommon that the head of the pedestrian impacts on the bonnet of the vehicle and the pedestrian may in that case be severely injured. The severity of the injury results from the fact that the front or bonnet, which is usually formed from thin metal sheet, would tend to bend, and then deforms on hard engine parts which are beneath the bonnet, such as the engine block. In order to reduce the severity of these accidents, it is well-known to use a deployable bonnet. By raising the rear part of the deployable bonnet to a raised position an "impact position" is reached, such that the distance between the bonnet and the hard engine parts is increased.

In addition to the deployable bonnet, a motor vehicle may also have a safety arrangement in the form of a pedestrian airbag, which, in a deployed state, at least partly covers the windscreen and/or the A-pillars. Such a pedestrian airbag may be inflated through the opening created between the deployable bonnet and the windscreen when the deployable bonnet is raised.

With such a deployable bonnet according to the prior art, the risk is reduced, or preferably avoided, that the pedestrian, and especially his/her head, may hit the hard engine parts. However, a conventional hinge mechanism is, by its construction rigid, in itself, also when retaining the bonnet in the raised position. Therefore, although the raised position is preferred over the normal position of the bonnet during a pedestrian collision, the pedestrian, and especially his/her head, would meet a certain rigidity upon impact with the bonnet due to the rigid hinge mechanism.

Document EP 2 345 563 A1 discloses a hinge mechanism according to the preamble of claim 1 and relates to a deployable bonnet system for pedestrian protection in the event of collision with a pedestrian. The system comprises a hinge mechanism providing a hinged connection between a bonnet and a body structure of a vehicle and an actuator adapted to press the bonnet from a closed position to a raised position. The hinge mechanism comprises a first hinge member connected to the bonnet and a second hinge member pivotally arranged to a body structure member connected to the body structure of the vehicle. The hinge mechanism is adapted to have a first state in which the first and second hinge members are releasably engaged to each other and a second state in which the first and second hinge members are released and pivotally engaged to each other. The hinge mechanism further comprises a spring member, which is adapted to be tensioned when the bonnet moves from the closed position to the raised position, such that the raising movement of the bonnet is retarded.

Document EP 1 818 224 A1 relates to a hinge mechanism to lift the rear edge of bonnet of a motor vehicle. The hinge mechanism comprises an upper leaf connected to the bonnet, a lower leaf connected to the body structure of the vehicle and a middle leaf connected to the upper leaf and the lower leaf. The upper leaf comprises a slot and the middle leaf comprises a stud, which is slideable in the slot, when the bonnet is moved from the normal position to the deployed position. Further, an energy dissipating means is provided to dissipate impact energy of the stud against the end of the slot as the bonnet approaches the deployed position.

A known drawback with hinge mechanisms of many prior art solutions is that they involve many individual components. This makes the hinge mechanism heavy and requires large packaging volume, as well as making it expensive and difficult to assemble in the vehicle at the production facility.

As may be realized from the above, there is a desire for an improved hinge mechanism, which is able to raise the bonnet to a raised position creating a distance to the hard engine parts, which hinge mechanism is not rigid in itself.

SUMMARY OF THE INVENTION

The object of the present invention is to overcome or at least ameliorate at least one of the disadvantages of the prior art, or to provide a useful alternative.

It is desirable to provide a hinge mechanism, which is able to raise the bonnet to a raised position, thereby creating a distance to the hard engine parts and which hinge mechanism is not rigid in itself.

It also desirable to provide a hinge mechanism comprising few components.

The object above may be achieved by the invention according to claim 1.

The hinge mechanism may be sold as a separate part. Alternatively it is intended to be mounted in a vehicle and sold as a part of the vehicle.

A bonnet can be provided with two hinge mechanisms. They may be located adjacent to each lateral side of the bonnet.

The pivotal connections between the second and third hinge members makes it possible to displace the bonnet between a closed position, covering the engine compartment and being the normal position of the bonnet during driving and parking, and an open position allowing access to the engine compartment. The hinge mechanism is for both the closed position and the open position, and during the displacement between the two positions, in its first state, in which the first and second hinge members are releasably engaged to each other. The first and second hinge members are thus not pivoted in relation to each other during the displacement between the closed and the open positions. Instead they are releasably engaged to each other, e.g. by an engaging means such as a shear screw. The engaging means is further adapted to release the first hinge member from the second hinge member in order to allow a displacement of the bonnet to the raised position.

During displacement of the bonnet to the raised position, a displacement which is normally started from the closed position of the bonnet, the hinge mechanism is displaced from the first to the second state by a pivotal displacement between the first and second hinge members. This pivotal displacement is made about the connection between the first hinge member and the first end of the second hinge member.

The hinge mechanism further comprises an abutment member. The predetermined position is a result of the shape of the abutment member.

In an embodiment the abutment member is attached to the second hinge member. When the hinge mechanism is in its second state, corresponding to the raised position of the bonnet, the first hinge member in that case abuts against the abutment member in a predetermined position relative to the abutment member. The first hinge member may for example abut against a top surface of the abutment member, a groove or an indentation in the abutment member. Thereby the first hinge member is prevented from sinking in relation to the abutment member. Further, when the hinge mechanism is in its second state, the first and second hinge members are displaceable in relation to each other via the abutment member. The abutment member may move and/or there may be movement within the abutment member. The abutment member may for example act as a spring, such that the movement is elastic, in that case preferably damped elastic. The movement may also, or instead, plastically deform the abutment member. The practical effect of the displaceability between the first and second hinge members is that, when a body part of the pedestrian, e.g. his/her head, hits the bonnet, the bonnet will not be completely rigid, but will instead be able to move slightly downwards in a movement determined by the properties of the abutment member, such that the risk of an injury to the pedestrian is less than would have been the case for a rigid engagement between the first hinge member and the second hinge member.

In an alternative embodiment, the abutment member is instead attached to the first hinge member. When the hinge mechanism is in its second state, the second hinge member in that case abuts against the abutment member in a predetermined position relative to the abutment member. The second hinge member may for example abut against a bottom surface of the abutment member, a groove or an indentation in the abutment member. Except for the geometrical differences from the above embodiment, such an abutment member functions in an equivalent way as already described.

In the first state of the hinge mechanism, the first and second hinge members may be substantially oriented with parallel longitudinal axes. This is suitable for a closed or open bonnet.

In the second state of the hinge mechanism, the first and second hinge members may be substantially oriented with an angle a between their longitudinal axes. The angle $\alpha$ may be between 5 and 75 degrees, preferably between 10 and 45 degrees and most preferably between 15 and 35 degrees. This is suitable when the bonnet has been raised to the raised position.

In case the abutment member is attached to the second hinge member, the abutment member may be arranged to press in a lateral direction against the first hinge member. Herein the term "lateral direction" relates to how the hinge mechanism is intended to be mounted in the vehicle; the lateral direction of the hinge mechanism being the same as the lateral direction of the vehicle.

In an embodiment, the first hinge member comprises a protrusion, the protrusion facing the second hinge member. The abutment member may then be arranged to press in a lateral direction against the protrusion on the first hinge member in the first state of the hinge mechanism. Further, in the second state of hinge mechanism, the protrusion may form an abutment for the abutment member, the protrusion thereby defining the predetermined position. During the displacement between the first and the second state of the hinge mechanism, the abutment member is first laterally pressed against the protrusion of he first hinge member. However, as the protrusion has moved so far that it has passed the abutment member, the abutment member will instead press against the surface of the first hinge member below the protrusion. The protrusion then acts as a stop for the abutment member providing the predetermined position of the first hinge member relative to the abutment member, in particular preventing the first hinge member from sinking in relation to the abutment member.

In an alternative embodiment, the protrusion is instead located on the abutment member. Such a protrusion may be arranged such that it fits in a corresponding hole, indentation or groove in the other of the first and second hinge members, i.e. the hinge member to which the abutment member is not attached, when the hinge mechanism is in the second state, thereby providing the predetermined position.

The displaceability between the first and second hinge members relative to each other via the abutment member in the second state of the hinge mechanism may be substantially in a vertical direction, vertical direction being related to how the hinge mechanism is intended to be mounted in the vehicle.

The displaceability between the first and second hinge members relative to each other via the abutment member in the second state of the hinge mechanism may be substantially elastic movability by means of the abutment member.

The abutment member may act as a damped harmonic oscillator.

In real oscillators, friction, or damping, slows the motion of the system. In many vibrating systems the frictional force $F_f$ can be modeled as being proportional to the velocity v of the object: $F_f = -cv$, where c is called the viscous damping coefficient.

The damped harmonic oscillator consists of a mass m, which experiences a single force, F, which pulls the mass in the direction of the point x=0 and depends on the mass's position x and a constant k. Newton's second law for damped harmonic oscillators is then:

$$F = -kx - c\frac{\mathrm{d}x}{\mathrm{d}t} = m\frac{\mathrm{d}^2x}{\mathrm{d}t^2}.$$

This is rewritten into the form:

$$\frac{\mathrm{d}^2x}{\mathrm{d}t^2} + 2\zeta\omega_0\frac{\mathrm{d}x}{\mathrm{d}t} + \omega_0^2 x = 0,$$

where

$$\omega_0 = \sqrt{\frac{k}{m}}$$ is called the "undamped angular frequency" of the oscillator and

$$\zeta = \frac{c}{2m\omega_0}$$ is called the "damping ratio".

The abutment member according to the invention may act as damped harmonic oscillator as regards the displaceability between the first and second hinge members relative to each other via the abutment member in the second state of the hinge mechanism. An over-damped system, having $\zeta > 1$, returns to equilibrium without oscillating along an exponential curve. The larger the values are for the damping ratio $\zeta$, the slower is the return to equilibrium. A critically damped system, with $\zeta = 1$, returns to equilibrium as quickly as possible without oscillating. Preferably, the damping ratio $\zeta \geq 1$, most preferably $\zeta = 1$. The system may also be underdamped, having $\zeta < 1$, but in that case the system would oscillate with the amplitude gradually approaching zero.

The possible maximal displacement between the first and second hinge members may be in the range of 0-50 mm, preferably 10-40 mm, most preferably 20-30 mm. If the impacting force is low, the displacement will not be maximal. If the abutment acts as a damped harmonic oscillator the maximal displacement corresponds to the maximal amplitude of the oscillator.

The abutment member may comprise a leaf spring, preferably being substantially L-shaped, C-shaped or U-shaped. Such a spring could acts a damped harmonic oscillator.

If the leaf spring is L-shaped, it may be attached to an underside of the second hinge member with the attachment being located at the side of the underside of the second hinge member facing away from the first hinge member. Thereby the spring may be given the desired elastic properties.

The hinge mechanism may be displaceable from the second state to the first state by pressing the abutment member towards the one of the first and second hinge members it is attached to, thereby releasing the abutment of the other of the first and second hinge members. Optionally, an extra tool is needed for this operation. Thereby, it is possible to move the bonnet back from the raised position to the closed position. This may be done after the collision situation in order to make it easier for the vehicle to be driven away from the collision area. It could also be useful, if the bonnet has been raised due to an erroneous triggering.

In a second aspect of the present invention, there is provided a vehicle comprising a hinge mechanism as described above.

BRIEF DESCRIPTION OF THE DRAWINGS

The present invention will hereinafter be further explained by means of non-limiting examples with reference to the appended figures wherein:

Figure 1    is a schematic side view of a front portion of a vehicle with a hinge mechanism according to the invention and illustrating the bonnet in a closed position and in an open position,

Figure 2    is the front portion of Figure 1 illustrating the bonnet in the closed position and in a raised position,

Figure 3    is a perspective top view of a hinge mechanism according to the invention assuming the bonnet is in its closed position with the hinge mechanism being in a first state,

Figure 4    is a perspective side view of the hinge mechanism of Figure 3,

Figure 5    is a perspective side view of the hinge mechanism of Figure 3, assuming the bonnet is in its open position with the hinge mechanism being in the first state,

Figure 6    is a perspective side view of the hinge mechanism of Figure 3, assuming the bonnet is in its raised position with the hinge mechanism being in a second state,

Figures 7a,b    is a detailed view of an abutment member being in the first state and in the second state respectively, and

Figures 8a,b    is a detailed view of an alternative abutment member being in the first state and in the second state respectively.

DETAILED DESCRIPTION OF PREFERRED EMBODIMENTS

The invention will, in the following, be exemplified by non-limiting embodiments. It should however be realized that the embodiments are included in order to explain principles of the invention and not to limit the scope of the invention, defined by the appended claims. Details from two or more of the embodiments may be combined with each other. The words front and rear used below relate to the vehicle, where front is the part coming first in the normal forward driving direction. The words longitudinal, lateral and vertical also relate to the vehicle. Longitudinal is in the longitudinal direction of the vehicle. Lateral is perpendicular to the longitudinal direction but being the same horizontal plane, i.e. sideways in the vehicle. Vertical is perpendicular to that plane. All directions relate to a vehicle being on a flat ground; if the ground is sloped the directions change accordingly.

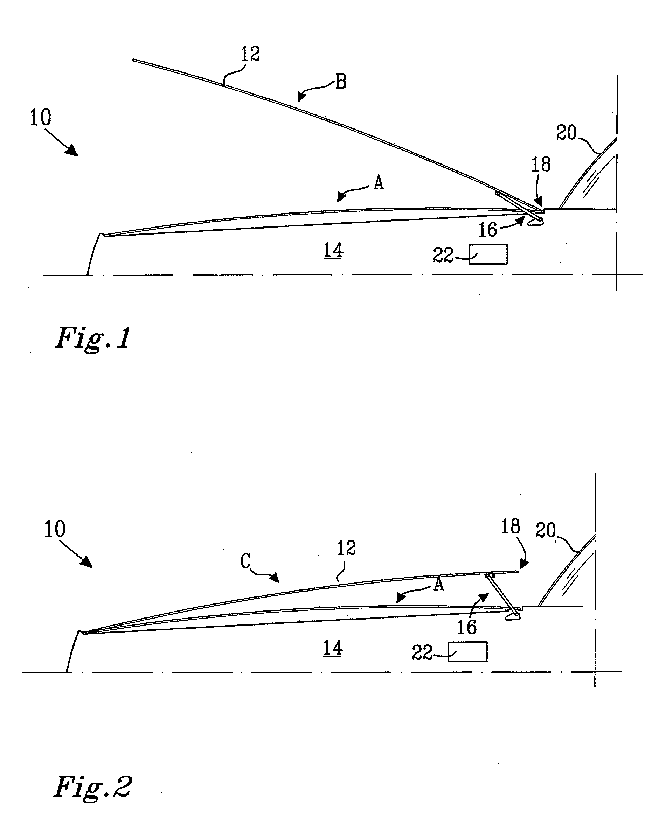

Figure 1 is a schematic side view of a front end of a vehicle 10, here a car. The vehicle is provided with a bonnet 12, which covers an engine compartment 14 and allows access to the engine compartment 14 for maintenance and repair. The bonnet 12 is connected to the vehicle 10 by a hinge mechanism 16, normally one hinge mechanism 16 adjacent to each lateral side of the bonnet 12. A rear end 18 of the bonnet 12 is directed towards a windscreen 20 of the vehicle 10. Normally the bonnet 12 is in a closed position A covering the engine compartment 14. The bonnet 12 can be lifted to an open position B allowing normal access to the engine compartment 14. The vehicle 10 is then normally stationary.

Figure 2 is a schematic side view of the front end of the vehicle 10 showing the bonnet 12 in a raised position C. The closed position A is also shown as a reference. The bonnet 12 is connected to an actuator 22, only schematically illustrated, which is positioned somewhere in the vehicle, generally beneath the bonnet 12. The actuator 22 is arranged to raise the bonnet 12 at its rear end 18 to the raised position C after sensor input that the vehicle 10 is about to hit a pedestrian and/or has hit a pedestrian. When the actuator 22 raises the bonnet 12, a distance is formed between the bonnet 12 and hard engine parts, allowing deflection of the bonnet 12 without the risk of the head of the pedestrian hitting any hard engine parts. The bonnet 12 may be raised at both ends, but normally the rear end 18 is raised to a higher position. The distance formed between the bonnet 12 and the hard engine parts is typically between 50 and 130 millimetres. Further, a pedestrian airbag (not illustrated) may be deployed along at least part of the windscreen 20 and/or the A-pillars. It should be realized that the actuator 22 may also be activated by, for example, an animal running out in front of the vehicle 10 or a cyclist. Normally, one or more sensors (not shown) are used to detect a collision with the pedestrian. In case of a collision, the actuator 22 is activated. The actuator 22 may be an inflatable member, such as a pedestrian airbag, a pyrotechnical device, a mechanical spring, a compressed-air piston, an electrical lifter, a rack or a lifting arm.

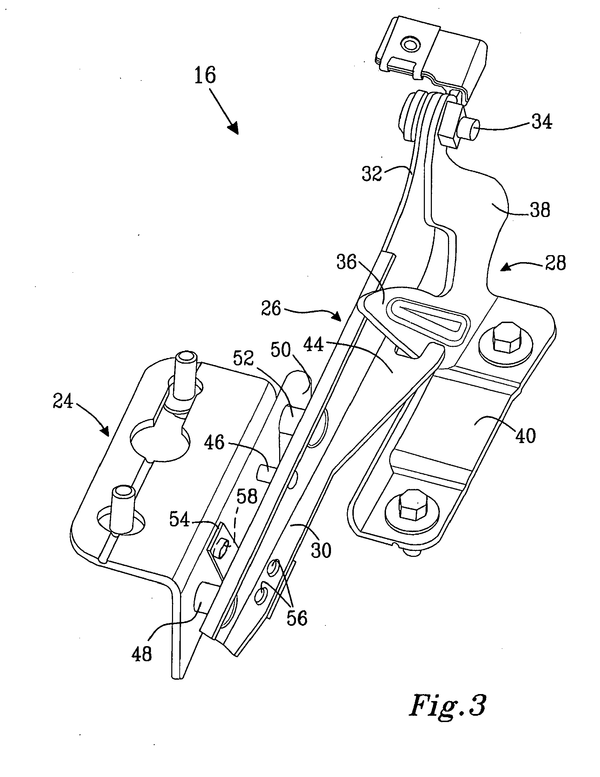

To be able to raise the bonnet 12 to the raised position C, the hinge mechanism 16 needs to move in a different way in relation to how it moves when the bonnet 12 is displaced to the normal opening positioning B. Therefore, the hinge mechanism 16 is adapted for these two different ways of movement, as described below. It should be noted that the hinge mechanism 16 shown in Figures 1 and 2 is not drawn to scale. The details of the hinge mechanism 16 will be described in more detail with reference to Figures 3-8.

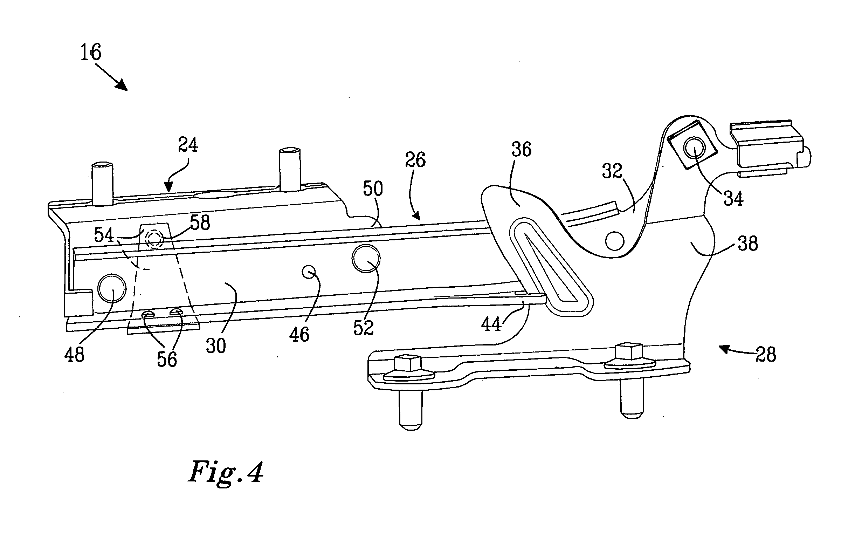

In Figure 3 a perspective top view of the hinge mechanism 16 in accordance with the invention is shown, assuming the bonnet 12, to which the hinge mechanism 16 is arranged, is in the closed position A. Figure 4 shows the corresponding side view. The hinge mechanism 16 comprises a first hinge member 24, a second hinge member 26 and a third hinge member 28. The first hinge member 24 is a piece of material that is fixedly attachable to the bonnet 12 by any suitable fastening means, for example by screwing, bolt and nut connection or by welding. The second hinge member 26 is an elongated hinge arm extending substantially in the longitudinal direction of the vehicle. Its first end 30 is connected to the first hinge member 24. The opposite end of the second hinge member 26, i.e. the second end 32, is pivotally connected to the third hinge member 28 by means of e.g. a pivot pin 34. The hinge mechanism 16 is in a first state, wherein the first hinge member 24 and the second hinge member 26 are releasably engaged to each other.

The third hinge member 28 comprises a first portion 36, a second portion 38 and a base portion 40. The first portion 36 is adapted to take up forces in the longitudinal direction of the vehicle imparted on it by the second hinge member 26, for example forces arising in a frontal collision. The base portion 40 is adapted to be fixedly attached to the body structure of the vehicle 10 by any suitable fastening means, for example by screwing, bolt and nut connection or by welding. The first 36 and the second 38 portions may be separate from each other, as in the illustrated embodiment, or they may be different regions of the same part. Normally, the first portion 36 is located longitudinally in front of the second portion 38.

In Figures 3-4 the second hinge member 26 is arranged to engage with the first portion 36 of the third hinge member 28, when the second hinge member 26 is subjected to a force or a force component acting in the longitudinal direction of the vehicle. When the bonnet 12 is subjected to such a force, the force will be transferred via the first hinge member 24 to the second hinge member 26. As a result thereof, the second hinge member 26 will be pushed rearwards until it engages with the first portion 36. Thereafter further rearward motion is hindered, and the bonnet 12 is prevented from intruding into the windscreen 20.

In the shown embodiment, the engagement is secured by a front crash hook 44 adapted to be located at least partly around the first portion 36 of the third hinge member 28 at engagement, but the invention would also work with another arrangement, such as two opposing flat surfaces. However, the hook shape is advantageous, since it also prevents lateral movement, except for a few millimeters within the front crash hook 44. As an alternative, the first portion 36 may comprise a hook shape, which can grip around the second hinge member 26.

Even if the embodiment of Figures 3-6 illustrates the front crash hook 44 adapted to be located at least partly around the first portion 36 of the third hinge member 28 at engagement, the front crash hook 44 does not influence the function disclosed by the invention for providing a non-rigid raised position of the bonnet 12. Therefore, the front crash hook 44 could be omitted.

Further, the first hinge member 24 and the second hinge member 26 are releasably engaged to each other by engaging means 46. The engaging means 46 is adapted to keep the first 24 and second 26 hinge member together, when the bonnet 12 is in the closed position A or the open position B, or during displacement therebetween. The engaging means 46 is further adapted to release the first hinge member 24 from the second hinge member 26 upon activation from the actuator 22. Accordingly, when the bonnet 12 is displaced upwards during deployment in order to reach the raised position C, the engaging means 46 is released and the first hinge member 24 can move pivotally relative to the second hinge member 26, for example around a pivot pin 48. The engaging means may be a shear screw 46, as in the illustrated embodiment. The shear screw 46 has a weakened portion, which will initiate the break of the shear screw 46 when the actuator 22 is activated, thereby allowing the bonnet 12 to be raised.

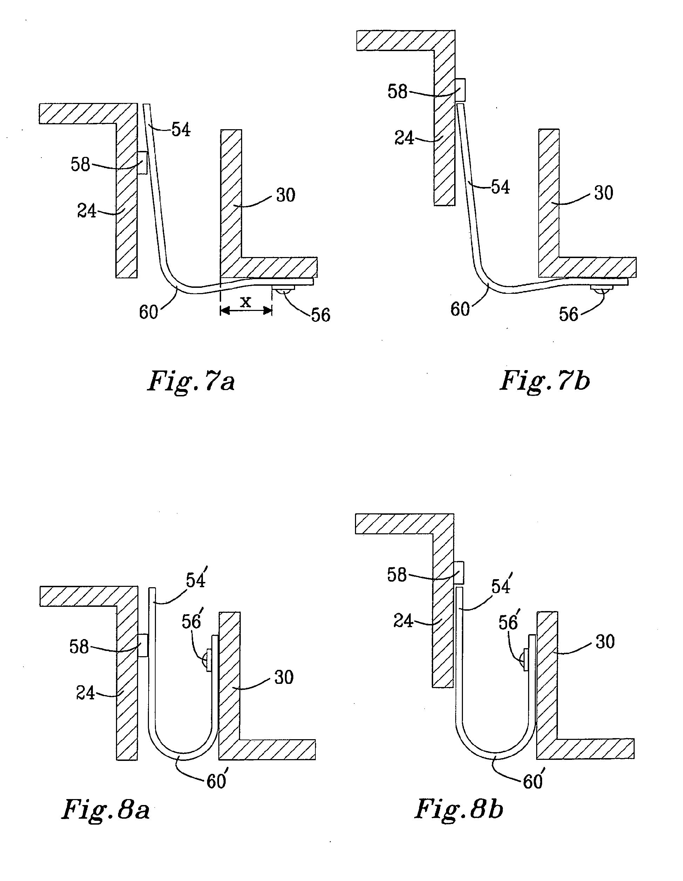

Figure 3 further illustrates an abutment member 54 in between the first hinge member 24 and the second hinge member 26 adjacent to its first end 30. The abutment member 54 has the shape of an L-shaped leaf spring. It is attached to an underside of the second hinge member 26 by attachment means 56, e.g. a screw, a bolt and nut connection or by welding. The attachment means 56 is located such that a distance x is created to the side of the second hinge member 26 facing the first hinge member 24, which is illustrated below in Figure 7a. The abutment member 54 presses against the first hinge member 24 in a lateral direction of the vehicle. The first hinge member 24 comprises a protrusion 58 on the side facing the second hinge member 26. The abutment member 54 thus presses against the protrusion 58. The abutment member 54 and its function is described in more detail in conjunction with Figures 7a and 7b.

Figure 3 also illustrates that the first hinge member 24 comprises a hook 50 which abuts against a protrusion 52, e.g. a bolt. Thereby the first hinge member 24 is prevented from downward movement with respect to the second hinge member 26. The hook 50 will further help to stabilize the hinge mechanism 16. The protrusion 52 may have a head having a wider diameter than the rest of the protrusion. Such a head may prevent lateral movement. The hook 50 and protrusion 52 are optional features, which may be omitted.

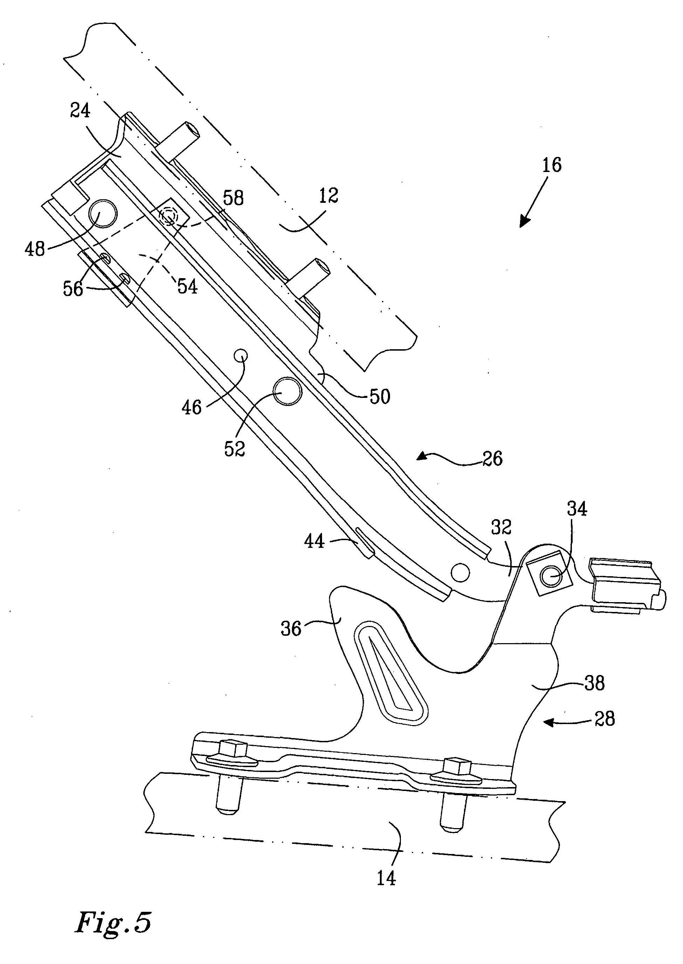

Figure 5 shows the position of the hinge mechanism 16 when the bonnet 12 is in its open position B. In order to reach this position, the second hinge member 26 pivots in relation to the third hinge member 28 about the pivot pin 34. The hinge mechanism 16 is in its first state, wherein the first hinge member 24 is releasably engaged with the second hinge member 26 by means of the engaging means 46. The abutment member 54 therefore is in the same position relative to the first hinge member 24 as in Figures 3 and 4.

During the normal opening or closing operation of the bonnet 12, the hinge mechanism 16 remains in the first state. Further, in the illustrated embodiment comprising the crash hook 44, the first portion 36 does not restrict the movement of the second hinge member 26. In particular, the front crash hook 44 moves freely without engaging the first portion 36.

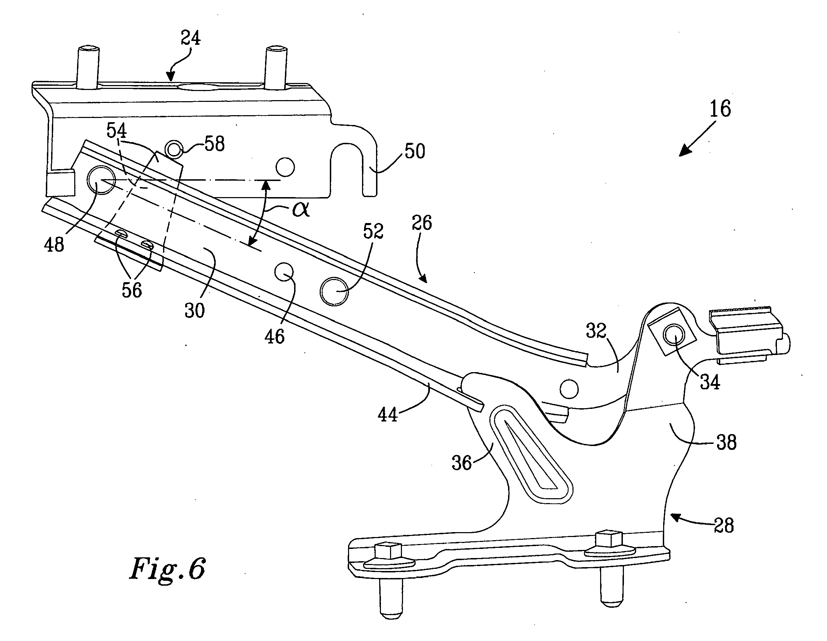

In Figure 6, a perspective view of the hinge mechanism 16 in accordance with the invention is shown, when the bonnet 12 has been displaced to the raised position C and the hinge mechanism 16 has been displaced to the second state.

In the event that a pedestrian collision is detected and the actuator 22 is activated, at least the rear end 18 of the bonnet 12 will be raised. When the bonnet 12 is being raised, the engaging means 46 is released and the first hinge member 24 and the second hinge member 26 are released from each other and become pivotally displaceable relative to each other about a pivot point, here defined by the pivot pin 48. The second hinge member 26 also pivots at its opposite end, the second end 32, around the pivot pin 34 during raising of the bonnet 12. Thereby the hinge mechanism 16 reaches its second state, in which the longitudinal axes of the first and second hinge members forms an angle $\alpha$ between each other. The angle $\alpha$ is between 5 and 75 degrees, preferably between 10 and 45 degrees and most preferably between 15 and 35 degrees.

Figure 6 also illustrates that the protrusion 58 has been displaced relative to the abutment member 54, such that the protrusion 58 in the raised position C abuts against the abutment member 54, thereby giving the first hinge member 24 a predetermined position in relation to the abutment member 54. During the displacement between the first and the second state of the hinge mechanism 16, the abutment member 54 is first laterally pressed against the protrusion 58 of he first hinge member 24 as described above for Figure 3. However, as the protrusion 58 has moved so far that it has passed the abutment member 54, the abutment member 54 will instead press against the surface of the first hinge member 24 below the protrusion 58. The protrusion 58 then acts as a stop for the abutment member 54 providing a predetermined position of the first hinge member 24 relative to the abutment member 54, in particular preventing the first hinge member 24 from sinking in relation to the abutment member 54. See also Figure 7b. Optionally, but not illustrated, the upper surface of the abutment member 54 may have a groove corresponding to the shape of the protrusion 58, thereby securing the position of the protrusion 58 in relation to the abutment member 54.

It is further seen in Figure 6 that the front crash hook 44 can grip around the first portion 36 of the third hinge member 28 during raising of the bonnet 12 and in the raised position C. Thereby, a force or a force component acting in the longitudinal direction of the vehicle may be transferred to the first portion 36 also during the raising movement and not only at the end positions of the hinge mechanism 16 corresponding to the closed bonnet A or the raised bonnet C.

Figure 6 also illustrates the hook 50 and protrusion 52, which were explained above in conjunction with Figure 3.

Figure 7a is a cross-section of an upper part of the hinge mechanism 16 being in the first state. The abutment member 54 is attached adjacent to the first end 30 of the second hinge member 26 by attachment means 56. There is a distance x between the attachment means 56 and the side of the second hinge member 26 facing the first hinge member 24. The abutment member 54 presses laterally against the protrusion 58, which is located on the surface of the first hinge member 24.

Figure 7b is a cross-section of a part of the hinge mechanism 16 being in the second state. The protrusion 58 forms an abutment for the abutment member 54. Therefore, if/when the pedestrian hits the bonnet 12 of the vehicle with the bonnet being in the raised position C, the first hinge member 24 will be supported by the protrusion 58 abutting against abutment member 54. The first hinge member 24 can thus not be displaced downwards in relation to the abutment member 54. However, the curvature 60 of the abutment member 54 will act as a leaf spring, such that the first hinge member 24 can move downwards in relation to the second hinge member 26 via the abutment member 54. The first hinge member 24 will thus be locked to the second hinge member 26 in a flexible way. The practical effect of this is that, when a part of the pedestrian, e.g. his/her head, hits the bonnet 12, the bonnet 12 will not be completely rigid, but can instead move slightly downwards in a movement determined by the properties of the abutment member 54, such that the impact to the pedestrian is less than would have been the case for a rigid locking between the first hinge member 24 and the second hinge member 26. The movement is preferably due to an elastic deformation of the abutment member 54, however if the impact force is high, there may be a plastic deformation as well, or instead. The stroke length of the movement is adapted such that there is still enough distance to the hard engine parts, e. g. in the range of 0-50 mm, preferably 10-40 mm, most preferably 20-30 mm. The properties of the abutment member 54 may be influenced by choice of material, geometric dimensions and location of the attachment means 56. Purely as an example, the further away the attachment means 56 is located from the first hinge member 24, the more elastic will the abutment member 54 be, assuming material and geometric dimensions are the same.

Figures 8a and b illustrate an alternative abutment member 54', wherein the abutment member 54' has a U-shaped form. The abutment member 54' is attached to the side of the second hinge member 26 facing the first hinge member 24. The function is otherwise similar as to what has been described with reference to Figures 7a and b.

The illustrated embodiment shows a bonnet which is opened at its front end, but there are also vehicles having a bonnet which is opened at its rear end, i. e. at the end adjacent to the windscreen. In that case, there will be one or more bonnet latches located at the rear end of the bonnet used for holding the bonnet in the closed position. In such a case, the functions of the hinge mechanism described above could be incorporated into the bonnet latch. In order to open the bonnet in a normal way to access the engine compartment, there are also hinges arranged at the front end of such a bonnet. In the case that a rear-opened bonnet is deployable to a raised position, a hinge mechanism providing deployment may be arranged at the rear end of the bonnet, possibly incorporated into the bonnet latch. Such a hinge mechanism may be according to an embodiment of the invention.

Further modifications of the invention within the scope of the appended claims are feasible. As such, the present invention should not be considered as limited by the embodiments and figures described herein. Rather, the full scope of the invention should be determined by the appended claims.

## Claims

1. A hinge mechanism (16) for a bonnet (12) of a vehicle (10), said hinge mechanism (16) being adapted to provide a hinged connection between said bonnet (12) and a body structure of said vehicle (10), said hinge mechanism (16) comprising

    - a first hinge member (24) connectable to said bonnet (12),
    - a second hinge member (26) having a first end (30) and a second end (32),

- a third hinge member (28) connectable to said body structure,

said first end (30) of said second hinge member (26) being pivotally connected to said first hinge member (24),

said second end (32) of said second hinge member (26) being pivotally connected to said third hinge member (28),

said hinge mechanism (10) being displaceable between

- a first state, corresponding to an open or closed bonnet (12), wherein said first and second hinge members (24, 26) are releasably engaged to each other, and

- a second state, corresponding to said bonnet (12) being in a raised position, said second state being different from said first state,

said hinge mechanism (16) being displaceable from said first state to said second state by a pivotal displacement of said first hinge member (24) with respect to said second hinge member (26),

**characterized in that**

said hinge mechanism (16) further comprises an abutment member (54, 54') attached to one of said first or second hinge members (24, 26), such that when said hinge mechanism (16) is in said second state, the other of said first and second hinge members (24, 26) abuts against said abutment member (54, 54') in a predetermined position relative to said abutment member (54, 54'), while in said second state said first and second hinge members (24, 26) are displaceable relative to each other via movement of said abutment member (54, 54') and/or movement within said abutment member (54, 54').

2. The hinge mechanism (16) according to claim 1, wherein said first and second hinge members (24, 26) are substantially oriented with parallel longitudinal axes in said first state of said hinge mechanism (16).

3. The hinge mechanism (16) according to claim 1 or 2, wherein said first and second hinge members (24, 26) are substantially oriented with an angle ($\alpha$) between their longitudinal axes in said second state of said hinge mechanism (16), said angle ($\alpha$) being between 5 and 75 degrees, preferably between 10 and 45 degrees and most preferably between 15 and 35 degrees.

4. The hinge mechanism (16) according to any one of the preceding claims, wherein said abutment member (54, 54') is attached to said second hinge member (26).

5. The hinge mechanism (16) according to claim 4, wherein said abutment member (54, 54') is arranged to press in a lateral direction against said first hinge member (24), lateral direction being related to how said hinge mechanism (16) is intended to be mounted in said vehicle (10).

6. The hinge mechanism (16) according to claim 5, wherein said abutment member (54, 54') in said first state of said hinge mechanism (16) is arranged to press in a lateral direction against a protrusion (58) on said first hinge member (24) said protrusion (58) facing said second hinge member (26).

7. The hinge mechanism (16) according to claim 6, wherein said protrusion (58) in said second state of hinge mechanism (16) forms an abutment for said abutment member (54, 54'), said protrusion (58) thereby defining said predetermined position.

8. The hinge mechanism (16) according to any one of the preceding claims, wherein the displaceability between said first and second hinge members (24, 26) relative to each other via said abutment member (54, 54') in said second state of said hinge mechanism (16) is substantially in a vertical direction, vertical direction being related to how said hinge mechanism (16) is intended to be mounted in said vehicle (10).

9. The hinge mechanism (16) according to any one of the preceding claims, wherein the displaceability between said first and second hinge members (24, 26) relative to each other via said abutment member (54, 54') in said second state of said hinge mechanism (16) is substantially elastic movability by said abutment member (54, 54') being an elastic member.

10. The hinge mechanism (16) according to any one of the preceding claims, wherein said abutment member (54, 54') for the displaceability between said first and second hinge members (24, 26) relative to each other via said abutment member (54, 54') in said second state of said hinge mechanism (16) acts as a damped harmonic oscillator, preferably having a damping ratio $\zeta \geq 1$.

11. The hinge mechanism (16) according to any one of the preceding claims wherein said displaceability between the first and second hinge members has a maximal displacement value of 0-50 mm, preferably 10-40 mm, most preferably 20-30 mm.

12. The hinge mechanism (16) according to any one of the preceding claims, wherein said abutment member (54, 54') comprises a leaf spring, preferably being substantially L-shaped, C-shaped or U-shaped.

13. The hinge mechanism (16) according to claim 12, wherein said leaf spring is L-shaped and attached to an underside of said second hinge member (26) with the attachment (56) being located at the side of the underside of said second hinge member (26) facing away from said first hinge member (24).

14. The hinge mechanism (16) according to any one of the preceding claims, wherein said hinge mechanism (16) is displaceable from said second state to said first state by pressing said abutment member (54, 54') towards the one of said first and second hinge members (24, 26) it is attached to, thereby releasing the abutment of said other of said first and second hinge members (24, 26).

15. A vehicle (10) comprising a hinge mechanism (16) according to any one of the preceding claims.

**Patentansprüche**

1. Gelenkmechanismus (16) für eine Motorhaube (12) eines Fahrzeugs (10), wobei der Gelenkmechanismus (16) dafür ausgelegt ist, eine gelenkige Verbindung zwischen der Motorhaube (12) und einer Karosseriestruktur des Fahrzeugs (10) bereitzustellen, wobei der Gelenkrrlechanismus (16) Folgendes umfasst:

    - ein erstes Gelenkelement (24), das mit der Motorhaube (12) verbindbar ist,
    - ein zweites Gelenkelement (26), das ein erstes Ende (30) und ein zweites Ende (32) besitzt,
    - ein drittes Gelenkelement (28), das mit der Karosseriestruktur verbindbar ist,
    wobei das erste Ende (30) des zweiten Gelenkelements (26) mit dem ersten Gelenkelement (24) schwenkbar verbunden ist,
    wobei das zweite Ende (32) des zweiten Gelenkelements (26) mit dem dritten Gelenkelement (28) schwenkbar verbunden ist,
    wobei der Gelenkmechanismus (10) verstellbar ist zwischen
    - einem ersten Zustand, der einer offenen oder einer geschlossenen Motorhaube (12) entspricht, wobei das erste und das zweite Gelenkelement (24, 26) lösbar miteinander in Eingriff sind, und
    - einem zweiten Zustand, der der angehobenen Position der Motorhaube (12) entspricht, wobei der zweite Zustand verschieden von dem ersten Zustand ist,

wobei der Gelenkmechanismus (16) durch eine schwenkbare Verstellung des ersten Gelenkelements (24) in Bezug auf das zweite Gelenkelement (26) von dem ersten Zustand zu dem zweiten Zustand verstellbar ist,
**dadurch gekennzeichnet, dass**
der Gelenkmechanismus (16) ferner ein Anschlagelement (54, 54') umfasst, das an einem des ersten oder des zweiten Gelenkelements (24, 26) angebracht ist, so dass dann, wenn der Gelenkmechanismus (16) in dem zweiten Zustand ist, das andere des ersten und des zweiten Gelenkelements (24, 26) in einer vorbestimmten Position in Bezug auf das Anschlagelement (54, 54') an dem Anschlagelement (54, 54') anschlägt, während in dem zweiten Zustand das erste und das zweite Gelenkelement (24, 26) in Bezug zueinander über eine Bewegung des Anschlagelements (54, 54') und/oder eine Bewegung innerhalb des Anschlagelements (54, 54') verstellbar sind.

2. Gelenkmechanismus (16) nach Anspruch 1, wobei das erste und das zweite Gelenkelement (24, 26) in dem ersten Zustand des Gelenkmechanismus (16) im Wesentlichen mit parallelen Längsachsen ausgerichtet sind.

3. Gelenkmechanismus (16) nach Anspruch 1 oder 2, wobei das erste und das zweite Gelenkelement (24, 26) in dem zweiten Zustand des Gelenkmechanismus (16) im Wesentlichen mit einem Winkel ($\alpha$) zwischen ihren Längsachsen ausgerichtet sind, wobei der Winkel ($\alpha$) zwischen 5 und 75 Grad, vorzugsweise zwischen 10 und 45 Grad und am stärksten bevorzugt zwischen 15 und 35 Grad liegt.

4. Gelenkmechanismus (16) nach einem der vorhergehenden Ansprüche, wobei das Anschlagelement (54, 54') an dem zweiten Gelenkelement (26) angebracht ist.

5. Gelenkmechanismus (16) nach Anspruch 4, wobei das Anschlagelement (54, 54') angeordnet ist, um in einer seitlichen Richtung gegen das erste Gelenkelement (24) zu drücken, wobei die seitliche Richtung darauf bezogen ist, wie der Gelenkmechanismus (16) in dem Fahrzeug (10) angebracht sein soll.

6. Gelenkmechanismus (16) nach Anspruch 5, wobei das Anschlagelement (54, 54') in dem ersten Zustand des Anschlagsmechanismus (16) angeordnet ist, um in einer seitlichen Richtung gegen einen Vorsprung (58) auf dem ersten Gelenkelement (24) zu drücken, wobei der Vorsprung (58) dem zweiten Gelenkelement (26) zugewandt ist.

7. Gelenkmechanismus (16) nach Anspruch 6, wobei der Vorsprung (58) in dem zweiten Zustand des Gelenkmechanismus (16) einen Anschlag für das Anschlagelement (54, 54') bildet, wobei der Vorsprung (58) dadurch die vorbestimmte Position definiert.

8. Gelenkmechanismus (16) nach einem der vorhergehenden Ansprüche, wobei in dem zweiten Zustand des Gelenkmechanismus (16) die Verstellbarkeit zwischen dem ersten und dem zweiten Gelenkelement (24, 26) in Bezug zueinander über das Anschlagelement (54, 54') im Wesentlichen in einer vertikalen Richtung erfolgt, wobei die vertikale Richtung darauf bezogen ist, wie der Gelenkmechanismus (16) in dem Fahrzeug (10) angebracht sein soll.

**9.** Gelenkmechanismus (16) nach einem der vorhergehenden Ansprüche, wobei in dem zweiten Zustand des Gelenkmechanismus (16) die Verstellbarkeit zwischen dem ersten und dem zweiten Gelenkelement (24, 26) in Bezug zueinander über das Anschlagelement (54, 54') im Wesentlichen elastische Beweglichkeit ist, indem das Anschlagelement (54, 54') ein elastisches Element ist.

**10.** Gelenkmechanismus (16) nach einem der vorhergehenden Ansprüche, wobei das Anschlagelement (54, 54') für die Verstellbarkeit zwischen dem ersten und dem zweiten Gelenkelement (24, 26) in Bezug zueinander über das Anschlagelement (54, 54') in dem zweiten Zustand des Gelenkmechanismus (16) als ein gedämpfter harmonischer Oszillator wirkt, der vorzugsweise ein Dämpfungsverhältnis $\zeta \geq 1$ hat.

**11.** Gelenkmechanismus (16) nach einem der vorhergehenden Ansprüche, wobei die Verstellbarkeit zwischen dem ersten und dem zweiten Gelenkelement einen maximalen Verstellungswert von 0-50 mm, vorzugsweise 10-40 mm, am stärksten bevorzugt 20-30 mm hat.

**12.** Gelenkmechanismus (16) nach einem der vorhergehenden Ansprüche, wobei das Anschlagelement (54, 54') eine Blattfeder umfasst, die vorzugsweise im Wesentlichen L-förmig, C-förmig oder U-förmig ist.

**13.** Gelenkmechanismus (16) nach Anspruch 12, wobei die Blattfeder L-förmig ist und an der Unterseite des zweiten Gelenkelements (26) angebracht ist, wobei die Befestigung (56) an der Seite der Unterseite des zweiten Gelenkelements (26) angeordnet ist, die von dem ersten Gelenkelement (24) abgewandt ist.

**14.** Gelenkmechanismus (16) nach einem der vorherigen Ansprüche, wobei der Gelenkmechanismus (16) von dem zweiten Zustand zu dem ersten Zustand durch Drücken des Anschlagelements (54, 54') zu dem ersten oder dem zweiten Gelenkelement (24, 26), an dem es angebracht ist, verstellbar ist, wodurch der Anschlag des anderen des ersten und des zweiten Gelenkelements (24, 26) gelöst wird.

**15.** Fahrzeug (10), das einen Gelenkmechanismus (16) nach einem der vorhergehenden Ansprüche umfasst.

**Revendications**

**1.** Mécanisme de charnière (16) pour un capot (12) d'un véhicule (10), ledit mécanisme de charnière (16) étant adapté pour fournir une connexion articulée entre ledit capot (12) et une structure de carrosserie dudit véhicule (10), ledit mécanisme de charnière (16) comprenant :

- un premier élément de charnière (24) pouvant être connecté audit capot (12),
- un deuxième élément de charnière (26) ayant une première extrémité (30) et une deuxième extrémité (32),
- un troisième élément de charnière (28) pouvant être connecté à ladite structure de carrosserie, ladite première extrémité (30) dudit deuxième élément de charnière (26) étant connectée de manière pivotante audit premier élément de charnière (24),
ladite deuxième extrémité (32) dudit deuxième élément de charnière (26) étant connectée de manière pivotante audit troisième élément de charnière (28),
ledit mécanisme de charnière (10) pouvant être déplacé entre
- un premier état, correspondant à un capot (12) ouvert ou fermé, dans lequel lesdits premier et deuxième éléments de charnière (24, 26) sont en prise l'un avec l'autre de façon détachable, et
- un deuxième état, correspondant audit capot (12) dans une position levée, ledit deuxième état étant différent dudit premier état, ledit mécanisme de charnière (16) pouvant être déplacé du premier état au deuxième état par un déplacement pivotant dudit premier élément de charnière (24) par rapport audit deuxième élément de charnière (26),

**caractérisé en ce que** ledit mécanisme de charnière (16) comprend en outre un élément de butée (54, 54') fixé à l'un desdits premier et deuxième éléments de charnière (24, 26), de sorte que lorsque ledit mécanisme de charnière (16) est dans ledit deuxième état, l'autre desdits premier et deuxième éléments de charnière (24, 26) prend appui sur ledit élément de butée (54, 54') dans une position prédéterminée par rapport audit élément de butée (54, 54'), tandis que dans ledit deuxième état, lesdits premier et deuxième éléments de charnière (24, 26) peuvent être déplacés l'un par rapport à l'autre via le mouvement dudit élément de butée (54, 54') et/ou un mouvement à l'intérieur dudit élément de butée (54, 54').

**2.** Mécanisme de charnière (16) selon la revendication 1, dans lequel lesdits premier et deuxième éléments de charnière (24, 26) sont substantiellement orientés avec des axes longitudinaux parallèles dans ledit premier état du mécanisme de charnière (16).

**3.** Mécanisme de charnière (16) selon la revendication 1 ou 2, dans lequel lesdits premier et deuxième éléments de charnière (24, 26) sont substantiellement orientés avec un angle ($\alpha$) entre leurs axes longitudinaux dans ledit deuxième état dudit mécanisme de charnière (16), ledit angle ($\alpha$) étant compris entre 5 et 75 degrés, de préférence entre 10 et 45 degrés et mieux encore entre 15 et 35 degrés.

**4.** Mécanisme de charnière (16) selon l'une quelconque des revendications précédentes, dans lequel ledit élément de butée (54, 54') est fixé audit deuxième élément de charnière (26).

**5.** Mécanisme de charnière (16) selon la revendication 4, dans lequel ledit élément de butée (54, 54') est agencé pour exercer une pression sur ledit premier élément de charnière (24) dans une direction latérale, ladite direction latérale se rapportant à la façon dont ledit mécanisme de charnière (16) est destiné à être monté dans ledit véhicule (10).

**6.** Mécanisme de charnière (16) selon la revendication 5, dans lequel ledit élément de butée (54, 54'), dans ledit premier état dudit mécanisme de charnière (16), est agencé pour exercer une pression dans une direction latérale sur une protubérance (58) présente sur ledit premier élément de charnière (24), ladite protubérance (58) étant en face dudit deuxième élément de charnière (26).

**7.** Mécanisme de charnière (16) selon la revendication 6, dans lequel ladite protubérance (58), dans ledit deuxième état du mécanisme de charnière (16), forme une butée pour ledit élément de butée (54, 54'), ladite protubérance (58) définissant de ce fait ladite position prédéterminée.

**8.** Mécanisme de charnière (16) selon l'une quelconque des revendications précédentes, dans lequel la mobilité entre lesdits premier et deuxième éléments de charnière (24, 26) l'un par rapport à l'autre par l'intermédiaire dudit élément de butée (54, 54') dans ledit deuxième état dudit mécanisme de charnière (16) se fait substantiellement dans une direction verticale, ladite direction verticale se rapportant à la façon dont ledit mécanisme de charnière (16) est destiné à être monté dans ledit véhicule (10).

**9.** Mécanisme de charnière (16) selon l'une quelconque des revendications précédentes, dans lequel la mobilité entre lesdits premier et deuxième éléments de charnière (24, 26) l'un par rapport à l'autre par l'intermédiaire dudit élément de butée (54, 54') dans ledit deuxième état dudit mécanisme de charnière (16) est substantiellement une mobilité élastique due au fait que ledit élément de butée (54, 54') est un élément élastique.

**10.** Mécanisme de charnière (16) selon l'une quelconque des revendications précédentes, dans lequel ledit élément de butée (54, 54') pour la mobilité entre lesdits premier et deuxième éléments de charnière (24, 26) l'un par rapport à l'autre par l'intermédiaire dudit élément de butée (54, 54') dans ledit deuxième état dudit mécanisme de charnière (16) agit comme un oscillateur harmonique amorti, ayant de préférence un facteur d'amortissement $\zeta \geq 1$.

**11.** Mécanisme de charnière (16) selon l'une quelconque des revendications précédentes, dans lequel ladite mobilité entre lesdits premier et deuxième éléments de charnière a une valeur de déplacement maximale de 0 à 50 mm, de préférence de 10 à 40 mm, et mieux encore de 20 à 30 mm.

**12.** Mécanisme de charnière (16) selon l'une quelconque des revendications précédentes, dans lequel ledit élément de butée (54, 54') comprend un ressort à lame, de préférence substantiellement en forme de L, de C ou de U.

**13.** Mécanisme de charnière (16) selon la revendication 12, dans lequel ledit ressort à lame est en forme de L et est fixé sur une face inférieure dudit deuxième élément de charnière (26) avec une fixation (56) située du côté de la face inférieure dudit deuxième élément de charnière (26) qui est éloignée dudit premier élément de charnière (24).

**14.** Mécanisme de charnière (16) selon l'une quelconque des revendications précédentes, dans lequel on peut faire passer ledit mécanisme de charnière (16) dudit deuxième état audit premier état en poussant ledit élément de butée (54, 54') vers l'élément de charnière, le premier ou le deuxième (24, 26), auquel il est fixé, en dégageant ainsi l'appui dudit autre desdits premier et deuxième éléments de charnière (24, 26).

**15.** Véhicule (10) comprenant un mécanisme de charnière (16) selon l'une quelconque des revendications précédentes.

*Fig.1*

*Fig.2*

*Fig.3*

*Fig.4*

EP 2 634 047 B1

*Fig.5*

Fig.6

EP 2 634 047 B1

*Fig.7a*

*Fig.7b*

*Fig.8a*

*Fig.8b*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2345563 A1
- EP 1818224 A1